Europäisches Patentamt

European Patent Office

Office européen des brevets

(19)

(11) Publication number: **0 005 874**
**B1**

# EUROPEAN PATENT SPECIFICATION

(12)

(45) Date of publication of patent specification: **23.09.81**

(21) Application number: **79200230.5**

(22) Date of filing: **10.05.79**

(51) Int. Cl.³: **E 21 B 43/25,**
**E 21 B 43/26, E 21 B 43/27**

(54) Method for increasing the productivity of a well penetrating an underground formation.

(30) Priority: **26.05.78 GB 2289978**

(43) Date of publication of application:
**12.12.79 Bulletin 79/25**

(45) Publication of the grant of the European patent:
**23.09.81 Bulletin 81/38**

(84) Designated Contracting States:
**DE FR GB NL**

(56) References cited:
**US - A - 3 547 198**
**US - A - 3 642 068**
**US - A - 3 768 564**
**US - A - 3 842 911**
**US - A - 3 918 524**
**US - A - 3 934 651**

(73) Proprietor: **SHELL INTERNATIONALE RESEARCH**
**MAATSCHAPPIJ B.V.**
**Carel van Bylandtlaan 30**
**NL-2596 HR DEN HAAG (NL)**

(72) Inventor: **Schols, Reinier Sophi**
**Volmerlaan 6**
**NL-2288 GD Rijswijk (NL)**
Inventor: **Haafkens, Rudolf**
**Volmerlaan 6**
**NL-2288 GD Rijswijk (NL)**
Inventor: **van der Vlis, Abraham Cornelis**
**Volmerlaan 6**
**NL-2288 GD Rijswijk (NL)**
Inventor: **Avison, Peter Brian**
**Carel van Bylandtlaan 30**
**NL-2596 HR The Hague (NL)**

(74) Representative: **Keuzenkamp, Abraham et al,**
**c/o Shell Internationale Research Maatschappij**
**B.V. P.O. Box 302**
**NL-2501 CH 's-Gravenhage (NL)**

Courier Press, Leamington Spa, England.

Method for increasing the productivity of a well penetrating an underground formation

The invention relates to a method for increasing the production of a well penetrating an underground formation. In particular the present invention relates to a method for increasing the productivity of a well penetrating a formation substantially consisting of acid-soluble rock, by fracturing the formation parts in the vicinity of the well and subjecting the fracture thus formed to an acid treatment.

In the recovery of hydrocarbon fluids from underground formations, use is made of wells that communicate with such formations. Hydrocarbon fluids present in the pore space of the formations flow into such wells and are lifted in these wells to the surface of the earth. Often, however, the productivity of a hydrocarbon-containing formation is relatively low and the hydrocarbons flow into the well at an uneconomical rate.

Various techniques for productivity increase are already known, such as fracturing, which technique makes use of a fluid that is injected via the well into the hydrocarbon containing formation surrounding the well. The fluid is injected at a pressure sufficiently high to fracture the formation, whereby a vertical fracture will be formed in the majority of cases. The fluid pressure in the well is subsequently released and hydrocarbons are allowed to flow out of the pore space into such fracture and to pass through the fracture to the well, in which they are further transported to the surface of the earth.

To prevent closing of the fracture after the pressure of the fracturing fluid has been lowered, a propping agent may be added to the fracturing fluid, this propping agent remaining in the fracture after it has been formed and preventing the full closure thereof after the fluid pressure in the fracture has been reduced from the fracturing pressure to the normal well pressure.

In another manner productivity increase may be obtained by increasing the permeability of the formation by injecting an acid composition through the well into the pore space. Application of such an acid treatment is particularly attractive in formations substantially consisting of acid-soluble rock, such as calcium carbonate rock. The acid reacts with the formation rock, thereby opening and enlarging passages in the formation, so that the permeability of the formation parts surrounding the well is increased in order to facilitate flow of hydrocarbons in the subsequent production period.

In an alternative manner, a fracturing fluid with acid properties may be used for productivity increase in wells. In another alternative manner, the formation may be first fractured whereafter an acid solution is injected into the fracture induced in the formation.

In particular, the present invention relates to a method for increasing the productivity of a well penetrating an underground formation substantially consisting of acid-soluble rock, which method comprises the sequential steps of:

1) installing in the well a casing having a plurality of perforations in the wall thereof;

2) inducing a fracture containing a viscous fluid in the formation such that the well is in the plane of the fracture;

3) injecting an acid solution through the perforations into the fracture at a pressure at which the fracture remains open, the viscosity ratio between the viscous fluid and the acid solution being chosen such that the viscous fluid is displaced in the fracture in an instable manner by the acid solution;

4) continuing the injection of the acid solution through the perforations until channels have been etched in areas of the fracture walls that face each other; and

5) allowing the fracture walls to be displaced to closing position.

Such method of treating an underground formation by means of a combined fracturing/acidizing process is known from the USA patent specification 3,918,524.

Object of the invention is to improve the productivity increase that can be obtained in an oil- or gas-containing formation by the known fracturing/acidizing treatment.

According to the invention, the fracturing/acidizing treatment includes the step of having the perforations distributed along the wall of the casing in clusters consisting of at least one perforation, the clusters being spaced at least 60 centimetres from one another along the longitudinal axis of the casing.

Extremely good results when applying the method according to the invention will be reached by arranging the passages in the wall of the casing at a distance between 90 and 180 centimetres from one another, said distance being measured along the longitudinal axis of the casing.

The unstable displacement of the viscous fluid in the fracture by a less viscous acid solution results in the formation of fingering flow paths of the acid solution through the viscous fluid present in the fracture. The acid solution in flowing along these paths, locally contacts the walls of the fracture, thereby etching away those parts thereof that line these paths. Consequently, channels are left at the locations of the paths after the fluid pressure in the fracture is released to allow the fracture to close. It has been found that an effective increase of the well productivity will only be reached if the acid is injected into the fracture through passages in the wall of the casing that are spaced from one another at distances that are at least 60 centimetres. Merging of the flow paths of the acid solution at a distance close to the well is thereby prevented. Such merging of flow paths, which paths are the base of the flow channel system that is eventually formed by the acid action on the fracture wells, would decrease the area of the drainage zones of the fracture bounding the flow channel system, and consequently limit the production rate of hydrocarbons from the formation zones that bound said fracture area.

The perforations are normally shot in the casing wall in a known manner. Each cluster of perforations may consist of a single perforation that is arranged at a distance of at least 60 centimetres from a neighbouring perforation. In an alternative manner, a cluster may consist of a plurality of perforations that are shot in the casing wall at a relatively short distance from each other, say at a distance between 5 and 10 centimetres (measured along the axis of the casing). Each cluster consisting of, say, 2—5 perforations is situated at a distance of at least 60 centimetres from the neighbouring clusters.

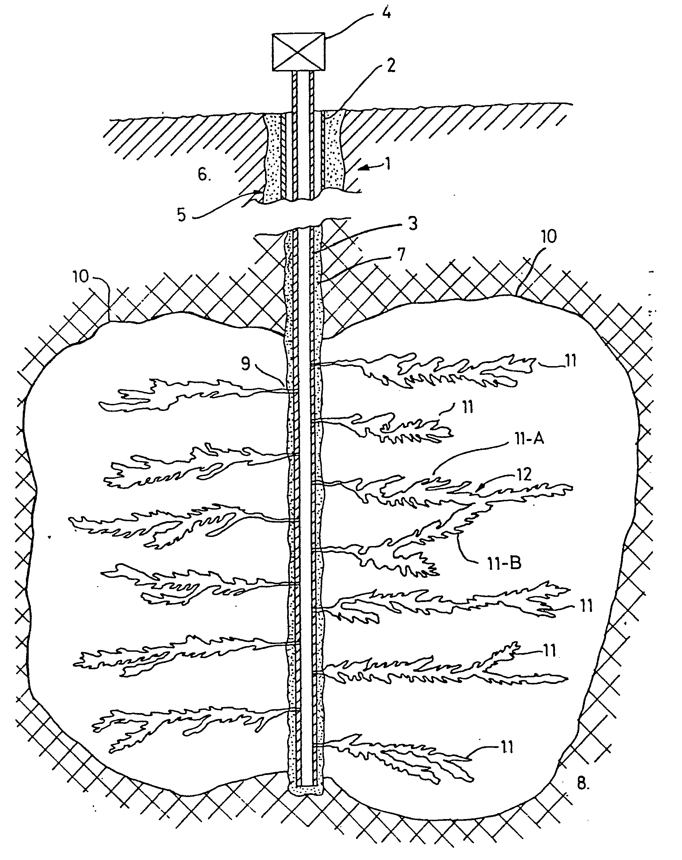

An embodiment of the method according to the invention will now be described by way of example. Reference is made to the drawing which schematically shows a vertical section over a well penetrating subsurface formation layers. This vertical section is in the plane of a vertical fracture co-operating with the well.

The well 1 comprises a large-diameter casing 2 and a casing 3 of smaller diameter suspended from the wellhead 4 in the borehole 5 penetrating the sub-surface formation layer 6. The casings are cemented in a manner known per se and the lower parts of the cement layer 7 and the casing 3 have been perforated by a perforator gun (not shown) at a level where they face the oil-containing formation 8 which substantially consists of limestone. After the perforations 9 have been formed, a viscous fracturing liquid is pumped down via the wellhead 4 through the casing 3 or a production tubing (not shown) suspended therein. The viscous liquid enters the pore space of the formation 8 facing the perforations 9 at a pressure sufficiently high to form a fracture 10. The minimum tectonic compressive stress direction in the formation 8 is in a horizontal plane, and the plane of the fraction 10 will consequently be vertical. Since the borehole 5 has been drilled in a vertical direction, the borehole will be situated in the plane of the fracture.

After a sufficient amount of liquid has been injected to create a fracture 10 of the required area, an acid solution is pumped down the well, which acid solution flows through the perforations 9 and into the fracture 10 which still contains the viscous fluid. Fluid supply to the fracture is maintained at a sufficiently high value to maintain the fracture open during all these operations.

The viscosity ratio between the viscous fluid present in the fracture 10 and the acid solution that is being injected into the fracture is chosen such that the viscous fluid is being displaced in the fracture by the acid solution in an unstable manner. As a result thereof, the acid solution forms "fingering" paths 11 in the mass of viscous fluid. Each path 11 is bounded by the viscous fluid in a vertical sense, and by parts of the fracture walls (that are situated at a small distance from one another, say, 2—6 millimetres) in a horizontal sense. The acid solution reacts with the rock where the acid is in contact with the fracture walls, thereby etching channels in the fracture walls, which channels match in such a way that on closing of the fracture walls (by lowering the fluid pressure therein and allowing the viscosity of the fracturing fluid to break down) a channel system is formed consisting of a plurality of channels, each channel extending between a perforation 9 in the casing 3 and a location in the formation 8 that is situated at an appreciable distance from the borehole 5.

The unstable displacement of the fracturing fluid by the acid solution, which causes the flow paths of the acid solution to obtain a "fingering" configuration, is already reached at relatively low values of the viscosity ratio, such as in the order of 50. For restricting the cross-sectional area of the acid fingers, thereby increasing the lateral extension of each fingering path with respect to the borehole 5, the viscosity ratio should be increased to a value of 150 or thereabove. An excellent fingering displacement will be reached at a viscosity ratio between 200 and 300.

The vertical spacing between the perforations 9 applied in the method according to the invention is at least 60 centimetres. Merging at a close distance of the well of two (or more) flows of acid solution that spring from neighbouring perforations 9 is thereby prevented. Such merging of two or more flows would result in a single fingering flow path, thereby decreasing the area of the drainage zone of the fracture as compared with the area of the drainage zone bounding a plurality of flow paths.

As shown in the drawing, the flow paths 11—A and 11—B merge at the location 12. This location, however, is situated at an appreciable distance from the well since the perforations 9 are situated at a distance of 60 centimetres from each other measured along the axis of the casing 3, and will therefore negatively influence the desired productivity increase to a small extent only. Merging of two flow paths at some distance from the well is therefore considered allowable in most cases. However, if maximum productivity increase is required, the distance between the perforations 9 should be increased, and may be between 90 and 180 centimetres.

After the channels have been etched in the fracture walls to an appreciable depth, the fluid pressure in the fracture is released and the viscosity of the viscous fluid present in the fracture is allowed to break down. Pressure release and viscosity breakdown may take place simultaneously. The fracture closes as a result thereof and the matching channels that have been etched in opposite areas of the fracture walls then form channel-like passageways through which oil will subsequently pass from the pore space of the formation 8 to the perforations 9 of the well 1. To promote this flow of oil, the pressure in the well 1 may be reduced to a required value.

It will be appreciated that application of the invention is not restricted to any particular way in which the well 1 is completed, and in which the perforations 9 are made in the well tubing.

Further, any type of fluid that is suitable for fracturing the formation 8 may be used for this purpose. The fracturing fluid may either be a fluid with relatively high-viscosity or a low-viscosity fluid. In the latter case, the low-viscosity fluid injection is followed by the injection of a high-viscosity fluid that displaces the low-viscosity fluid in the fracture. The supply pressure of the low-viscosity fluid is chosen sufficiently high to maintain the fracture open.

Examples of high-viscosity fluids that may be applied in the present method are gelled water, hydrocarbon-in-water emulsions, water-in-hydrocarbon emulsions, and gelled hydrocarbons. A viscosity breaker may be added to the viscous fluid, which viscosity breaker breaks the viscosity of the fluid after a predetermined interval, either under influence of the temperature prevailing in the fractured formation, or by a retarded chemical reaction, or by any other mechanism. Such viscosity breakers are known per se, and do not need to be described in detail. It will be understood that the original viscosity of the viscous fluid should substantially be maintained during the injection of the acid solution. The viscosity of the fluid is allowed to break down after the fluid pressure in the fracture has been released, or simultaneously with such pressure release.

It will be appreciated that a large variety of acids, either inorganic or organic, is available, which acids are capable for etching the formation rock of subterranean formations that are to be treated by the method according to the invention. For etching a calcium carbonate formation (such as a limestone formation or a dolomite formation), use may be made of aqueous solutions of hydrochloric acid, acetic acid, formic acid, or mixtures thereof. Retarders may be added to such solutions if considered necessary. To protect the equipment in the borehole or well, it is often advisable to add corrosion inhibitors to the solution. In an alternative manner, solutions may be used wherein the acid is formed in situ in the formation by means of a retarded chemical reaction. Such solutions are known per se and do not require any detailed description.

Buffer fluids may be injected into the formation being treated by the present method, such buffer fluids being injected between the fracturing fluid and the acid solution. Buffer fluids are known per se and do not need to be described in detail.

If desired, pretreatment fluids may be injected prior to the injection of the fracturing fluid. All fluids that are injected via the well may have a fluid loss preventing agent added thereto.

In case the distribution of the acid over the perforations 9 is not uniform, diverting agents (known per se) may be applied for obstructing the flow of fluid through those perforations via which appreciable amounts of acid have already passed into the fracture 10, thereby forming etched channel pairs of sufficient extension. By obstructing these perforations, the remainder of the acid to be injected will then flow through the other perforations via which in the initial acid injection phase relatively small amounts of acid have passed only, said small amount having formed fingering paths of restricted extension. The flow rate of acid through these latter perforations is then increased and the fingering paths extend thereby to the required size. Such diverting process may be repeated as many times as required.

It will be appreciated that if the well 1 is not vertical, the direction thereof should be chosen such that the well is within the plane of the fracture 10. This means that the minimum tectonic compressive stress direction in the formation 8 should be ascertained (such as by drilling a test well, fracturing the formation around said well and measuring the orientation of said fracture) and the well should be drilled in a direction deviating from the vertical, but in a plane that is approximately orthogonally located with respect to the said minimum tectonic compressive stress direction.

The distances between the perforations in the wall of the casing applied in the present method are measured along the longitudinal axis of the casing. The perforations may be situated in a straight line along said casing, or in two or more such straight lines. The perforations shown in the drawing are situated in two straight lines. It will be appreciated that the perforations do not need to be situated in the plane of the fracture to be formed (as shown in the drawing), since the fracturing fluid on entering the formation after leaving the perforations will break the formation in a direction orthogonal to the minimum tectonic stress direction, irrespective of the situation of the perforations with respect to this direction. Thus, the centres of the perforations may be situated on a spiral line on the casing wall, or according to any other pattern, provided that the distance between a perforation and the neighbouring perforations is at least 60 centimetres measured in a direction along the longitudinal axis of the casing. Each perforation 9 may, if desired, be replaced by a cluster of say 2 to 5 perforations. Each cluster is then situated at a distance of at least 60 centimetres from the neighbouring clusters.

It may be advantageous when applying the present method in particular types of subterranean acid-soluble formations, to supply a propping agent to the fraction either prior to, or after the acidizing step of the method according to the present invention.

Summarizing it is observed that the present invention relates to the formation of a plurality of channel-like passageways in the walls of a fracture induced in an acid-soluble formation. The channels are etched in the formation walls by injecting acid of relatively low viscosity into the fracture when the latter is open and contains a relatively viscous fluid. The acid flows into the fracture via a plurality of perforations in the well casing. The viscosity difference between the relatively viscous fluid and the acid causes the acid flows to finger through the fluid, as a result whereof the channels are formed. To prevent merging of the acid flows close to the well, the perforations are spaced at sufficiently large distances (at least 60 centimetres) from each other.

## Claims

1. A method for increasing the productivity of a well (1) penetrating an underground formation substantially consisting of acid-soluble rock (8) comprises the sequential steps of:
1) installing in the well (1) a casing (3) having a plurality of perforations (9) in the wall thereof;
2) inducing a fracture (10) containing a viscous fluid in the formation, such that the well (1) is in the plane of the fracture (10);
3) injecting an acid solution through the perforations (9) into the fracture (10) at a pressure at which the fracture remains open, the viscosity ratio between the viscous fluid and the acid solution being chosen such that the viscous fluid is displaced in the fracture in an unstable manner by the acid solution;
4) continuing the injection of the acid solution through the perforations (9) until channels have been etched in areas of the fracture walls that face each other; and
5) allowing the fracture walls to be displaced to closing position, characterized in that, the perforations (9) are distributed along the wall of the casing (3) in clusters consisting of at least one perforation, the clusters being spaced at least 60 centimetres from one another along the longitudinal axis of the casing.

2. The method according to claim 1, wherein the clusters are spaced from one another at a distance between 90 and 180 centimetres.

3. The method according to claim 1 or 2, wherein the perforations (9) of a cluster are spaced between 5 and 10 centimetres from one another along the longitudinal axis of the casing.

## Revendications

1. Une méthode pour augmenter la productivité d'un puits (1) de forage pénétrant dans une formation souterraine qui est constituée essentiellement par une roche (8) soluble dans les acides, cette méthode comprenant les étapes séquentielles qui consistent:
— à installer dans le puits (1) un tubage (3) qui comporte, dans sa paroi, une série de perforations (9);
— à provoquer la formation d'une fracture (10) contenant un fluide visqueux dans la formation de telle sorte que le puits (1) soit dans le plan de la fracture (10);
— à injecter une solution acide à travers les perforations (9) dans la fracture (10) à une pression à laquelle la fracture reste ouverte, le rapport des viscosités entre le fluide visqueux et la solution acide étant choisi tel que le fluide visqueux est déplacé dans la fracture d'une manière instable par la solution acide;
— à poursuivre l'injection de la solution acide à travers les perforations (9) jusqu'à ce que des canaux aient été gravés dans des surfaces des parois de la fracture qui se font face; et
— à laisser les parois de la fracture se déplacer jusqu'à la position fermée; caractérisée en ce que les perforations (9) sont réparties le long de la paroi du tubage (3) en groupes constitués par au moins une perforation, les groupes étant espacés d'au moins 60 centimètres les uns des autres suivant l'axe longitudinal du tubage.

2. La méthode selon la revendication 1, dans laquelle les groupes sont espacés les uns des autres d'une distance comprise entre 90 et 180 centimètres.

3. La méthode selon la revendication 1 ou 2, dans laquelle les perforations (9) d'un groupe sont espacées de 5 à 10 centimètres les unes des autres suivant l'axe longitudinal du tubage.

## Patentansprüche

1. Verfahren zur Erhöhung der Förderleistung eines mit einer unterirdischen Langerstätte in Verbindung stehenden Bohrlochs (1), welche Lagerstätte hauptsächlich aus durch Säure auflösbarem Gestein (8) besteht, in folgenden Verfahrensstufen:
a) Einbringung einer Verrohrung (3) in das Bohrloch (1), welche in ihrer Wand eine Vielzahl von Öffnungen (9) enthält;
b) Erzeugung einer Spalte (10), gefüllt mit einer viskosen Flüssigkeit, wobei das Bohrloch (1) in der Ebene der Spalte (10) liegt;
c) Einführung einer Säurelösung durch die Öffnungen (9) in die Spalte (10) unter einem solchen Druck, dass diese offen bleibt, wobei das Viskositätsverhältnis zwischen viskoser Flüssigkeit und Säurelösung derart gewählt ist, dass die viskose Flüssigkeit in der Spalte (10) in instabiler Weise durch die Säurelösung verdrängt wird;
d) Einführung der Säurelösung durch die Öffnungen (9) solange, bis in gegenüberliegende Teilen der Wänden der Spalte (10) Kanäle eingeätzt sind und

e) Schliessen der Spalte (10), dadurch gekennzeichnet, dass die Öffnungen (9) über die Wand der Vorrohrung (3) in Gruppen von zumindest einer angeordnet sind und die Gruppen in einem Abstand von zumindest 60 cm voneinander entlang der Längsachse der Verrohrung vorliegen.

2. Verfahren nach Anspruch 1, dadurch gekennzeichnet, dass die Gruppen der Öffnungen in einem Abstand voneinander von 90 bis 180 cm vorliegen.

3. Verfahren nach Anspruch 1 oder 2, dadurch gekennzeichnet, dass die Öffnungen (9) einer Gruppe voneinander 5 bis 10 cm in Längsachse der Verrohrung entfernt sind.